# EUROPÄISCHE PATENTSCHRIFT

(11) **EP 3 221 266 B1**
(45) Veröffentlichungstag und Bekanntmachung des Hinweises auf die Patenterteilung: **13.03.2019**
(21) Anmeldenummer: 15784363.2
(22) Anmeldetag: 22.10.2015
(51) Int. Cl.: C02F 1/32, G01J 1/04, G01J 1/42

(54) **UV-SENSOR**
UV SENSOR
CAPTEUR D'UV

(30) Priorität: 21.11.2014 DE 102014017188
(43) Veröffentlichungstag der Anmeldung: 27.09.2017
(73) Patentinhaber: Xylem IP Management S.à.r.l., 1259 Senningerberg (LU)
(72) Erfinder: KRÜGER, Friedhelm, 32657 Lemgo (DE); KANIGOWSKI, Uwe, 42553 Velbert (DE)
(74) Vertreter: Lenzing Gerber Stute
(86) Internationale Anmeldenummer: PCT/EP2015/074474
(87) Internationale Veröffentlichungsnummer: WO 2016/078865

(56) Entgegenhaltungen:
- WO-A1-01/17907
- WO-A2-2010/135635
- JP-A- 2005 144 382
- JP-A- 2009 112 943
- US-A1- 2008 105 623

## Beschreibung

Die vorliegende Erfindung betrifft eine Strahleranordnung mit den Merkmalen des Oberbegriffs des Anspruchs 1 und eine UV-Desinfektionsanlage mit den Merkmalen des Oberbegriffs des Anspruchs 10.

UV-Strahler werden seit vielen Jahrzehnten für Desinfektion von Trinkwasser und Abwasser, in Klimaanlagensümpfen und zur Desinfektion von Arbeitsbereichen in biologischen Laboratorien eingesetzt.

In Anlagen zur UV-Wasseraufbereitung werden UV-C-Strahlungsquellen in einem Quarzglashüllrohr zur Wasserbestrahlung angeordnet. Das Hüllrohr schützt die Strahlungsquelle vor Beschädigungen von außen und gewährleistet gleichzeitig eine effiziente Betriebstemperatur.

UV-Desinfektionsanlagen umfassen eine Vielzahl von UV-Strahlern, die in wenigstens einem vom Wasser durchströmten Durchflussreaktor angeordnet sind. Beim Durchströmen des Reaktors wird das Wasser einer hinreichenden Dosis an UV-C-Strahlung ausgesetzt, um den gewünschten Effekt zu erreichen. Ein Problem dabei ist, dass die UV-Strahler einer natürlichen Alterung unterliegen. Diese Alterung, die mit einer Abnahme der Strahlungsleistung einhergeht, muss daher überwacht werden, damit eine zuverlässige UV-Bestrahlung des Wassers möglich ist. Ist die Strahlungsleistung unter ein Minimum abgesunken, so muss der Strahler ausgetauscht werden. Die abgegebene Strahlungsleistung wird von UV-Sensoren überwacht.

Herkömmlicherweise sind diese UV-Sensoren in dem Durchflussreaktor zwischen den Hüllrohren der Strahler und orthogonal zu den parallel zueinander orientierten Strahlerachsen angeordnet, wodurch das gemessene Signal sich grundsätzlich aus einer Überlagerung der Strahlungsanteile aus mehreren Strahlungsquellen zusammensetzt. Um die UV-Strahlungsleistung über den Durchflussreaktor lückenlos zu überwachen und die Betriebssicherheit von Mehrstrahleranlagen zu verbessern, ist eine Einzelstrahlerüberwachung wünschenswert.

Aus der DE 297 07 052 U1 ist eine Einzelstrahlerüberwachung bekannt, bei der ein UV-Sensor zwischen der Strahlungsquelle und dem Hüllrohr in einem kleinen Abstand zur Strahlungsquelle angeordnet ist.

Das Dokument JP 2005 144382 A zeigt eine Strahleranordnung mit einem einseitig geschlossenen Hüllrohr und mit einem Sensor, der die aus dem geschlossenen Ende austretende Strahlung misst, wobei ein Spalt zwischen dem Sensor und dem Hüllrohr mit dem zu behandelnden Medium gefüllt ist. Die gemessene Strahlung ist abhängig von den Transmissionseigenschaften des Mediums.

Das Dokument US 2008/105623 A1 zeigt eine Strahleranordnung mit einem Hüllrohr und einem Sensor, der in der Nähe eines offenen Endes des Hüllrohres gehalten ist. Der Sensor empfängt Strahlung über einen nahe am Strahler montierten Spiegel, dessen Sichtfeld unmittelbar die Strahleroberfläche erfasst.

Es ist Aufgabe der vorliegenden Erfindung eine Strahleranordnung und eine UV-Desinfektionsanlage anzugeben, die eine Einzelerfassung der UV-Strahlungsintensität einer UV-Strahlungsquelle ermöglichen und dabei einen einfachen Ein- und Ausbau der Strahlungsquelle erlauben.

Diese Aufgabe wird von einer Strahleranordnung mit den Merkmalen des Anspruchs 1 und einer UV-Desinfektionsanlage mit den Merkmalen des Anspruchs 10 gelöst.

Danach ist eine Strahleranordnung mit einer UV-Strahlungsquelle, einem die UV-Strahlungsquelle umgebenden Hüllrohr, das an einem offenen Ende eine ringförmige Stirnfläche aufweist, und mit einem UV-C-Sensor mit einer sensitiven Fläche, vorgesehen, wobei der UV-C-Sensor in optischer Verbindung mit der Stirnfläche des Hüllrohrs steht, so dass die sensitive Fläche des UV-C-Sensors in einem Betrieb der UV-Strahlungsquelle die aus der Stirnfläche des Hüllrohrs austretende UV-Strahlung detektieren kann. Die durch Totalreflexion in dem Hüllrohr reflektierte UV-Strahlung der UV-Strahlungsquelle, wird bei dem Austritt aus der Stirnfläche des Hüllrohrs gemessen. Eine Einzelerfassung der UV-Strahlungsintensität der UV-Strahlungsquelle ist somit möglich. Da der Sensor außerhalb des Hüllrohres angeordnet ist, ist eine Montage bzw. Demontage der UV-Strahlungsquelle einfach durchzuführen.

Vorzugsweise ist das Hüllrohr zylindrisch und weist eine gleichmäßige Wandstärke auf.

In einer Ausführungsform ist vorgesehen, dass der UV-C-Sensor Teil einer Sensoreinheit mit einer Einkoppeloptik ist, wobei die Stirnfläche des Hüllrohrs in Sichtverbindung mit der Einkoppeloptik steht und die Einkoppeloptik die aus der Stirnfläche des Hüllrohrs austretende UV-Strahlung an den UV-C-Sensor weitergibt. Dabei ist es vorteilhaft, wenn die Einkoppeloptik ein Lichtleiter ist und beabstandet zur Stirnfläche des Hüllrohrs angeordnet ist. Es kann auch vorgesehen sein, dass die Einkoppeloptik in Anlage an die Stirnfläche angeordnet ist.

In einer weiteren Ausführungsform ist der UV-C-Sensor beabstandet und in direkter Sichtverbindung zur Stirnfläche des Hüllrohrs angeordnet. Eine Einkoppeloptik ist dabei nicht vorgesehen. Der UV-C-Sensor misst direkt die aus der Stirnfläche des Hüllrohrs austretende UV-Strahlung. Dabei kann der UV-C-Sensor auch in Anlage an die Stirnfläche des Hüllrohrs angeordnet sein.

Vorzugsweise ist die Stirnfläche des Hüllrohrs parallel zu einer sensitiven Fläche der Einkoppeloptik und/oder sensitiven Fläche des UV-C-Sensors angeordnet.

Weiterhin bevorzugt, weist die Sensoreinheit einen Kantenfilter auf.

Bei den genannten Ausführungsformen ist es vorteilhaft vorgesehen, dass das Hüllrohr an seinem freien Ende in einen Sitz eines Verbindungselementes aufgenommen ist, wobei das Verbindungselement die Lage des Hüllrohrs zur UV-Strahlungsquelle vorgibt und das Hüllrohr nach außen hin abdichtet.

Dabei ist vorzugsweise vorgesehen, dass das Verbindungselement und die Sensoreinheit jeweils einen elektrischen Anschluss aufweisen.

Weiterhin vorgesehen ist eine UV-Desinfektionsanlage zur Desinfektion von Wasser, aufweisend wenigstens eine Strahleranordnung mit wenigstens einem der vorhergehenden Merkmale. Vorzugsweise weist die UV-Desinfektionsanlage eine Vielzahl von solchen Strahleranordnungen auf, die parallel zueinander ausgerichtet sind und in einer gemeinsamen Halterung gehalten sind.

Eine bevorzugte Ausführungsform der Erfindung wird nachfolgend anhand der Zeichnung näher erläutert.

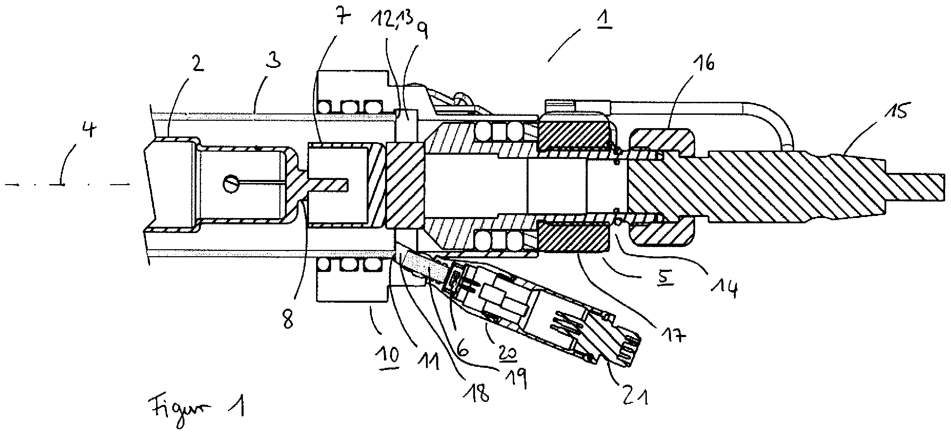

Die Figur 1 zeigt einen Längsschnitt einer erfindungsgemäßen Strahleranordnung 1 mit einer Strahlungsquelle 2, die von einem im wesentlichen zylindrischen Hüllrohr 3 aus UV-durchlässigem Material entlang ihrer Längsachse 4 konzentrisch umgeben ist und mit einem Verbindungselement 5 und einem UV-C-Sensor 6. Das Verbindungselement 5 weist eine Buchse 7 auf, in der ein Kontaktsockel 8 der Strahlungsquelle 2 aufgenommen ist. Die Buchse 7 durchsetzt eine kreisförmige Scheibe 9, die im Zusammenspiel mit einem das Hüllrohr 3 im Bereich der Buchse 7 umgebenden Dichtungssystem 10 als Sitz 11 für das Hüllrohr 3 an seinem offenen Ende 12 fungiert. Das Hüllrohr 3 weist eine gleichmäßige Wandstärke auf und ist an seinem Ende 12 senkrecht zu seiner Längsachse 4 abgeschnitten, wodurch sich eine ringförmige Stirnfläche 13 bildet. Die Stirnfläche 13 liegt zumindest teilweise in Anlage mit der Scheibe 9. Das Dichtungssystem 10 dichtet das Hüllrohr 3 nach außen hin ab. Die Buchse 7 des Verbindungselements 5 ist mit einem elektrischen Anschluss 14 für einen Anschlussstecker 15 der Strahleranordnung 1 verbunden. Der Anschlussstecker 15 wird mit dem Anschluss 14, der Teil des Verbindungselements 5 ist, mittels einer Überwurfmutter 16 befestigt. Zur Montage des Dichtsystems 10 ist eine zweite Überwurfmutter 17 vorgesehen. Die Scheibe 9 weist im Bereich des Sitzes 11 für das Hüllrohr 3 eine durchsetzende Ausnehmung 18 auf, in der wenigstens zum Teil eine Einkoppeloptik 19 des UV-C-Sensors 6 angeordnet ist. Der UV-C-Sensor 6 ist über ein Verbindungselement 20 mit einem elektrischen Anschlussstecker 21 verbunden.

Das von der UV-Strahlenquelle 2 erzeugte Licht wird beim Durchtritt durch das UV-durchlässige Material des Hüllrohrs 3 gebeugt. Bevorzugt besteht das Hüllrohr 3 aus Quarzglas. Dabei kommt es teilweise zur Totalreflexion. Ein Teil des Lichts verbleibt somit im Hüllrohr 3 und wird dort hin und her reflektiert. Das Hüllrohr 3 fungiert somit als eine Art Lichtleiter. Die UV-Strahlung tritt an der Stirnfläche 13 des Hüllrohrs 3 aus und wird über einen Luftspalt mittels der Einkoppeloptik 19 dem Sensor 6 zugeführt. Es kann auch vorgesehen sein, dass die Einkoppeloptik 19 direkt an die Stirnfläche 13 ankoppelt. Weiterhin kann auch eine direkte axiale Ankopplung des Sensors 6 an die Stirnfläche 13 mit oder ohne Luftspalt sinnvoll sein. In allen Fällen ist es vorteilhaft, wenn der UV-Sensor 6 einen Kantenfilter aufweist. In der hier dargestellten Ausführungsform wird nur ein Teil des aus der ringförmigen Stirnfläche 13 austretenden Lichtes für die Messung verwendet.

In einer anderen Ausführungsform ist vorgesehen, dass geeignete optische Übergangsstücke eingesetzt werden, die eine flächendeckendere oder sogar eine Gesamtausnutzung der von der ringförmigen Stirnseite 13 abgegebenen Strahlung ermöglichen.

Die ankoppelnde Fläche des Sensors 6 bzw. der Einkoppeloptik 19 muss nicht zwangsläufig orthogonal zur Längsachse der Strahlungsquelle 4 verlaufen.

Vorzugsweise weist der UV-C-Sensor 6 eine Siliziumkarbid (SiC) Diode auf.

Die UV-Strahleranordnungen können Teil eines Durchflussreaktors einer UV-Strahlungsanlage, auch Modul genannt, sein. Das Modul weist eine Bodenplatte, die mit ihrer Unterseite auf dem Boden eines von Wasser durchströmten Kanals aufsteht und eine damit verbundene Halterung auf, in der die UV-Strahleranordnungen parallel zueinander gehalten sind. Die UV-Strahleranordnungen sind dabei mit ihren einen Enden in der Halterung gehalten und mit ihren anderen Enden stehen sie auf der Oberseite der Bodenplatte auf. Die Verbindungselemente und die elektrischen Anschlüsse ragen dabei aus dem Wasser heraus.

Nach der Erstinstallation einer UV-Desinfektionsanlage mit einer Vielzahl von erfindungsgemäßen UV-Strahleranordnungen wird eine Normierungsmessung vorgenommen, bei der das von den UV-Sensoren gemessene Signal aufgezeichnet wird. Diese Normierungsmessung erlaubt es unabhängig von den zuvor genannten Ausführungsformen, die relative Strahlungsintensität der Einzelstrahler im Betrieb der Anlage zu bestimmen. Beim Betrieb einer Mehrstrahleranlage ist somit ein direkter Vergleich von Strahlungsanteilen aller installierten Strahlenquellen möglich.

Die vorliegende Erfindung gibt eine Strahleranordnung an, die eine Einzelerfassung der UV-Strahlungsintensität einer UV-Strahlungsquelle weitestgehend ermöglicht.

Der ausgekoppelte Strahlungsanteil ist repräsentativ für die Strahlerleistung und ein Maß für den Strahlungsfluss der UV-Strahlung in das Wasser. Zwar tragen auch hier benachbarte Strahlungsquellen einen Signalanteile zum Messsignal des UV-C-Sensors bei, aber dieser Anteil ist nahezu unbedeutend.

Durch die Anordnung des UV-C-Sensor außerhalb des Hüllrohres, im Bereich des Verbindungselements, ist die Strahlungsquelle einfach auszutauschen. Die erfindungsgemäße Messung der Strahlerleistung erfolgt somit unabhängig von äußeren Einflüssen.

## Patentansprüche

1. Strahleranordnung (1) mit einer UV-Strahlungsquelle (2), einem die UV-Strahlungsquelle (2) umgebenden Hüllrohr (3), das an einem offenen Ende (12) eine ringförmige Stirnfläche (13) aufweist, und mit einem UV-C-Sensor (6) mit einer sensitiven Fläche, **dadurch gekennzeichnet, dass** der UV-C-Sensor (6) in optischer Verbindung mit der Stirnfläche (13) des Hüllrohrs (3) steht, so dass die sensitive Fläche des UV-C-Sensors (6) in einem Betrieb der UV-Strahlungsquelle (2) die aus der Stirnfläche (13) des Hüllrohrs (3) austretende UV-Strahlung detektieren kann.

2. Strahleranordnung (1) nach Anspruch 1, **dadurch gekennzeichnet, dass** das Hüllrohr (3) zylindrisch ist und eine gleichmäßige Wandstärke aufweist.

3. Strahleranordnung (1) nach Anspruch 1 oder 2, **dadurch gekennzeichnet, dass** der UV-C-Sensor (6) Teil einer Sensoreinheit mit einer Einkoppeloptik (19) ist, wobei die Stirnfläche (13) des Hüllrohrs (3) in Sichtverbindung mit der Einkoppeloptik (19) steht und die Einkoppeloptik (19) die aus der Stirnfläche (13) des Hüllrohrs (3) austretende UV-Strahlung an den UV-C-Sensor (6) weitergibt.

4. Strahleranordnung (1) nach Anspruch 3, **dadurch gekennzeichnet, dass** die Einkoppeloptik (19) ein Lichtleiter ist und beabstandet zur Stirnfläche (13) des Hüllrohrs (3) angeordnet ist.

5. Strahleranordnung (1) nach einem der Ansprüche 1 oder 2, **dadurch gekennzeichnet, dass** der UV-C-Sensor (6) beabstandet und in direkter Sichtverbindung zur Stirnfläche (13) des Hüllrohrs (3) angeordnet ist.

6. Strahleranordnung (1) nach einem der vorhergehenden Ansprüche, **dadurch gekennzeichnet, dass** die Stirnfläche (13) des Hüllrohrs (3) parallel zu einer sensitiven Fläche der Einkoppeloptik (19) und/oder sensitiven Fläche des UV-C-Sensors (6) angeordnet ist.

7. Strahleranordnung (1) nach einem der vorhergehenden Ansprüche, **dadurch gekennzeichnet, dass** die Sensoreinheit einen Kantenfilter aufweist.

8. Strahleranordnung (1) nach einem der vorhergehenden Ansprüche, **dadurch gekennzeichnet, dass** das Hüllrohr (3) an seinem freien Ende (12) in einen Sitz (11) eines Verbindungselementes (5) aufgenommen ist, wobei das Verbindungselement (5) die Lage des Hüllrohrs (3) zur UV-Strahlungsquelle (2) vorgibt und das Hüllrohr (3) nach außen hin abdichtet.

9. Strahleranordnung (1) nach Anspruch 8, **dadurch gekennzeichnet, dass** das Verbindungselement (5) und die Sensoreinheit jeweils einen elektrischen Anschluss (14, 21) aufweisen.

10. UV-Desinfektionsanlage zur Desinfektion von Wasser aufweisend wenigstens eine Strahleranordnung (1) nach einem der vorhergehenden Ansprüche.

11. UV-Desinfektionsanlage nach Anspruch 10 mit einer Vielzahl von Strahleranordnungen (1), die parallel zueinander ausgerichtet sind und in einer gemeinsamen Halterung gehalten sind.

## Claims

1. Radiator arrangement (1) comprising a UV radiation source (2), a cladding tube (3) surrounding the UV radiation source (2), which has an annular end face (13) at an open end (12), and a UV-C sensor (6) with a sensitive surface, **characterised in that** the UV-C sensor (6) is in optical communication with the end face (13) of the cladding tube (3), so that the sensitive surface of the UV-C sensor (6) can detect the UV radiation emerging from the end face (13) of the cladding tube (3) in an operation of the UV radiation source (2).

2. Radiator arrangement (1) according to Claim 1, **characterised in that** the cladding tube (3) is cylindrical and has a uniform wall thickness.

3. Radiator arrangement (1) according to Claim 1 or 2, **characterised in that** the UV-C sensor (6) is part of a sensor unit with a coupling optic (19), wherein the end face (13) of the cladding tube (3) is in visual contact with the coupling optic (19) and the coupling optic (19) passes on the UV radiation exiting from the end face (13) of the cladding tube (3) to the UV-C sensor (6).

4. Radiator arrangement (1) according to Claim 3, **characterised in that** the coupling optic (19) is a light guide and is arranged spaced apart from the end face (13) of the cladding tube (3).

5. Radiator arrangement (1) according to either one of Claims 1 or 2, **characterised in that** the UV-C sensor (6) is arranged spaced apart and in direct visual contact with the end face (13) of the cladding tube (3).

6. Radiator arrangement (1) according to any one of the preceding claims, **characterised in that** the end face (13) of the cladding tube (3) is arranged parallel to a sensitive surface of the coupling optic (19) and/or sensitive surface of the UV-C sensor (6).

7. Radiator arrangement (1) according to any one of the preceding claims, **characterised in that** the sensor unit has an edge filter.

8. Radiator arrangement (1) according to any one of the preceding claims, **characterised in that** the cladding tube (3) is received at its free end (12) into a seat (11) of a connecting element (5), wherein the connecting element (5), specifies the position of the cladding tube (3) to the UV radiation source (2) and the cladding tube (3) seals to the outside.

9. Radiator arrangement (1) according to Claim 8, **characterised in that** the connecting element (5) and the sensor unit each have an electrical connection (14, 21).

10. UV disinfection system for the disinfection of water comprising at least one radiator arrangement (1) according to any one of the preceding claims.

11. UV disinfection system according to Claim 10 having a plurality of radiator arrangements (1), which are aligned parallel to each other and are held in a common holder.

## Revendications

1. Arrangement radiateur (1) comprenant une source de rayonnement UV (2), un tube d'enveloppe (3) qui entoure la source de rayonnement UV (2), lequel possède une surface frontale (13) annulaire au niveau d'une extrémité ouverte (12), et comprenant un détecteur d'UV-C (6) ayant une surface sensible, **caractérisé en ce que** le détecteur d'UV-C (6) se trouve en liaison optique avec la surface frontale (13) du tube d'enveloppe (3), de sorte que la surface sensible du détecteur d'UV-C (6) peut détecter le rayonnement UV qui sort de la surface frontale (13) du tube d'enveloppe (3) lors d'un fonctionnement de la source de rayonnement UV (2).

2. Arrangement radiateur (1) selon la revendication 1, **caractérisé en ce que** le tube d'enveloppe (3) est cylindrique et possède une épaisseur de paroi uniforme.

3. Arrangement radiateur (1) selon la revendication 1 ou 2, **caractérisé en ce que** le détecteur d'UV-C (6) fait partie d'une unité de détection comprenant une optique d'injection (19), la surface frontale (13) du tube d'enveloppe (3) se trouvant en contact visuel avec l'optique d'injection (19) et l'optique d'injection (19) transmettant au détecteur d'UV-C (6) le rayonnement UV qui sort de la surface frontale (13) du tube d'enveloppe (3).

4. Arrangement radiateur (1) selon la revendication 3, **caractérisé en ce que** l'optique d'injection (19) est une fibre optique et elle est disposée espacée de la surface frontale (13) du tube d'enveloppe (3).

5. Arrangement radiateur (1) selon l'une des revendications 1 ou 2, **caractérisé en ce que** le détecteur d'UV-C (6) est disposé espacé de la surface frontale (13) du tube d'enveloppe (3) et en contact visuel direct avec celle-ci.

6. Arrangement radiateur (1) selon l'une des revendications précédentes, **caractérisé en ce que** la surface frontale (13) du tube d'enveloppe (3) est disposée parallèlement à une surface sensible de l'optique d'injection (19) et/une surface sensible du détecteur d'UV-C (6).

7. Arrangement radiateur (1) selon l'une des revendications précédentes, **caractérisé en ce que** l'unité de détection possède un filtre à arêtes.

8. Arrangement radiateur (1) selon l'une des revendications précédentes, **caractérisé en ce que** le tube d'enveloppe (3) est accueilli au niveau de son extrémité libre (12) dans un siège (11) d'un élément de liaison (5), l'élément de liaison (5) prédéfinissant la position du tube d'enveloppe (3) par rapport à la source de rayonnement UV (2) et réalisant l'étanchéité du tube d'enveloppe (3) vers l'extérieur.

9. Arrangement radiateur (1) selon la revendication 8, **caractérisé en ce que** l'élément de liaison (5) et l'unité de détection possèdent respectivement une borne électrique (14, 21).

10. Équipement de désinfection aux UV destiné à la désinfection de l'eau, comprenant au moins un arrangement radiateur (1) selon l'une des revendications précédentes.

11. Équipement de désinfection aux UV selon la revendication 10, comprenant une pluralité d'arrangements radiateurs (1) qui sont orientés parallèlement les uns aux autres et sont maintenus dans un support commun.
